# FASCICULE DE BREVET EUROPEEN

(11) **EP 0 489 661 B1**
(45) Date de publication et mention de la délivrance du brevet: **24.04.1996**
(21) Numéro de dépôt: 91403296.6
(22) Date de dépôt: 05.12.1991
(51) Int. Cl.: H04B 7/185

(54) **Procédé de transmission d'informations par voie herzienne entre un satellite et une pluralité de stations terrestres et agencements pour la mise en oeuvre dudit procédé**
Verfahren zur Funkübertragung von Nachrichten zwischen Satelliten und Grundstationen und Anordnungen zur Ausführung des Verfahrens
Method of transmitting information by radio waves between a satellite and a plurality of ground stations, and arrangements for the implementation of the system

(30) Priorité: 05.12.1990 FR 9015224
(43) Date de publication de la demande: 10.06.1992
(73) Titulaire: Poutrel, Jean-Jacques, F-92200 Neuilly (FR)
(72) Inventeur: Poutrel, Jean-Jacques, F-92200 Neuilly (FR)
(74) Mandataire: Kopacz, William James

(56) Documents cités:
- WO-A-81/02081
- US-A- 4 884 208
- TOUTE L'ELECTRONIQUE no. 540, Janvier 1989, PARIS, FR pages 30 - 33; IMBAULT: 'Les micro-ondes au secours du guidage'
- NACHRICHTENTECHNISCHE ZEITSCHRIFT vol. 39, no. 8, Août 1986, BERLIN, DE pages 560 - 566; KRIEG: 'Mobile Funkfernwirkanlage zur Verkehrsbeeinflussung'

## Description

La présente invention concerne un procédé de transmission d'informations par voie hertzienne entre un satellite et une pluralité de stations terrestres. De tels procédés sont mis en oeuvre depuis de nombreuses années pour des applications tant civiles que militaires très diverses. La mise en oeuvre de ce procédé implique l'utilisation par chaque site terrestre de réception et/ou d'émission d'antennes spéciales adaptées à la réception d'ondes centimètriques provenant ou destinées au satellite. Ces antennes doivent en outre être situées dans des zones dans lesquelles les conditions de transmission dans les bandes UHF ou VHF sont satisfaisantes. Cela n'est généralement pas le cas dans les centres urbains. En effet, la bande de fréquence employée pour la transmission entre les satellites et les stations terrestres est choisie de façon à minimiser les perturbations provenant de la réflexion partielle sur l'ionosphère. Ces bandes de fréquences ne sont pas optimales pour la transmission dans les sites urbains, où les constructions employant des matériaux métalliques empêchent la propagation des signaux. Par ailleurs, il est difficile, sinon techniquement, du moins économiquement, d'équiper des stations terrestres mobiles, par exemple des véhicules, voire des stations portables, d'antennes et de moyens de réception et/ou d'émission suffisamment performants pour pallier ce handicap. On a donc proposé dans l'art antérieur de créer des réseaux de réémetteurs. A titre d'exemple, le réseau "IRIDIUM" développé par la société MOTOROLA consiste à mettre en oeuvre 77 satellites qui communiquent avec des équipements portatifs pour les zones de bonne réception des ondes centimétriques, et pour les autres zones avec des stations-relais raccordées au réseau commuté traditionnel. Ces centres au sol représentent des investissements importants et nécessitent une infrastructure spécifique lourde. En outre, la densification de l'espace urbain rend difficile l'implantation de tels centres au sol à l'intérieur même de la zone de mauvaise transmission des ondes centimétriques, et implique donc la mise en place de moyens de transmission d'informations avec les stations terrestres de forte puissance, ou par câble coaxial supprimant la possibilité de liaison avec des stations mobiles.

L'objet de la présente invention est de remédier à ces inconvénients en proposant une solution économique et efficace permettant la communication entre des stations terrestres de faible puissance et de coûts réduits avec un satellite de communication.

A cet effet, le procédé selon l'invention consiste à intégrer dans une pluralité d'agencements urbains ou ruraux ayant une fonction principale de signalisation, de décoration ou de présentation d'informations une première série de moyens d'émission et/ou de réception opérant dans les longueurs d'onde utilisées pour la transmission d'informations avec ledit satellite et au moins une deuxième série de moyens d'émission et/ou de réception opérant dans une bande de longueur d'onde compatible avec les conditions de transmissions entre lesdits deuxièmes moyens et lesdites stations terrestres, la portée desdits deuxième moyens étant inférieure aux dimensions de la zone de mauvaises conditions de réception des ondes centimétriques.

Le procédé selon l'invention présente de nombreux avantages. Tout d'abord, de nombreux agencements sont déjà implantés en milieu urbain, en des points particuliers de la zone globale de mauvaises conditions de transmission dans lesquels la liaison avec le satellite reste possible. Il s'agit par exemple des panneaux de signalisation routière disposés sur les boulevards périphériques entourant des centres urbains importants, ou des panneaux d'affichages présentant un volume intérieur disponible permettant de loger un émetteur de forte puissance ou un récepteur sensible ainsi que les antennes correspondantes, et qui en outre sont généralement déjà reliés à une source d'électricité. En conséquence, il est possible de constituer un réseau de transmission d'informations efficace sans réaliser d'investissements importants pour acquérir ou louer des emplacements coûteux pour l'implantation de stations au sol. Par ailleurs, le procédé selon l'invention évite la multiplication abusive de stations techniques dans un cadre urbain qui, du fait de la pression publique, présentera des exigences croissantes en ce qui concerne la protection de l'environnement esthétique.

Avantageusement, lesdits agencements sont constitués par des panneaux publicitaires reliés à une source d'énergie.

Selon un mode de mise en oeuvre avantageux, lesdits agencements sont constitués par des panneaux d'informations comportant des moyens d'affichages de messages visuels. De tels panneaux constituent souvent un maillage étroit d'un site urbain. Ils sont relativement bien admis tant par les élus locaux, car ils constituent un vecteur de communication et de promotion de leur réalisation, voire de leur image, que par la population qui y trouve des informations culturelles ou pratiques utiles. Ces panneaux disposent d'un volume intérieur suffisant pour loger l'ensemble des moyens techniques de transmission. En outre, le procédé selon l'invention peut comporter des moyens de détection d'un signal de priorité apte à déclencher l'émission d'un message radiodiffusé, télédiffusé et/ou à déclencher l'affichage d'un message visuel sur ledit agencement. Ce message peut être une annonce de l'imminence d'une catastrophe naturelle ou politique, ou simplement de prévention d'un danger.

Selon une autre variante avantageuse, le procédé selon l'invention consiste en ce que l'on intègre en outre dans lesdits agencements des moyens de localisation de stations terrestres mobiles susceptibles de se déplacer dans la zone de mauvaises conditions de réception, lesdits moyens de localisations générant un signal représentatif de la position de ladite station terrestre mobile, ledit signal étant transmis au satellite.

La présente invention concerne également un panneau d'affichage publicitaire pour la mise en oeuvre du procédé précédemment exposé caractérisé en ce qu'il comporte une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres disposées dans une zone de mauvaises conditions de transmission d'ondes centimétriques. Le panneau selon ce mode de réalisation peut être substitué à un panneau existant et remplir une double fonction d'affichage et de relais pour les signaux considérés.

Selon un autre mode de réalisation, l'invention est constituée par un panneau d'affichage d'informations visuels provenant d'un serveur central de gestion des messages d'informations. Il comporte une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres disposées dans une zone de mauvaises conditions de transmission d'ondes centimétriques.

Selon une variante avantageuse, ledit panneau d'affichage d'informations visuelles comporte en outre un détecteur d'un signal de priorité générant un signal d'interruption de l'affichage du message d'information provenant dudit serveur central et provoquant l'affichage d'un message d'information prioritaire et/ou l'émission d'un message prioritaire par voie hertzienne dans la bande de fréquence des récepteurs de stations terrestres.

Selon un autre mode de mise en oeuvre, l'invention consiste en un panneau de signalisation routière comportant une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres disposées dans une zone de mauvaises conditions de transmission d'ondes centimétriques.

Selon une variante,l'agencement pour la mise en oeuvre de l'invention comporte un émetteur apte à activer l'émission par un système embarqué sur une station terrestre mobile déterminée d'un signal codé, ledit signal codé étant détecté par un récepteur goniométrique équipant ledit agencement, ledit agencement comportant en outre des moyens de transmission à un satellite de communication d'un signal relatif à la position de ladite station terrestre mobile déterminée.

La présente invention sera mieux comprise à la lecture de la description qui suit d'un exemple de réalisation particulier non limitatif, illustré par les dessins où :
- la figure 1 représente un schéma général d'un réseau conforme à l'invention
- la figure 2 représente le schéma général d'un deuxième mode de réalisation.

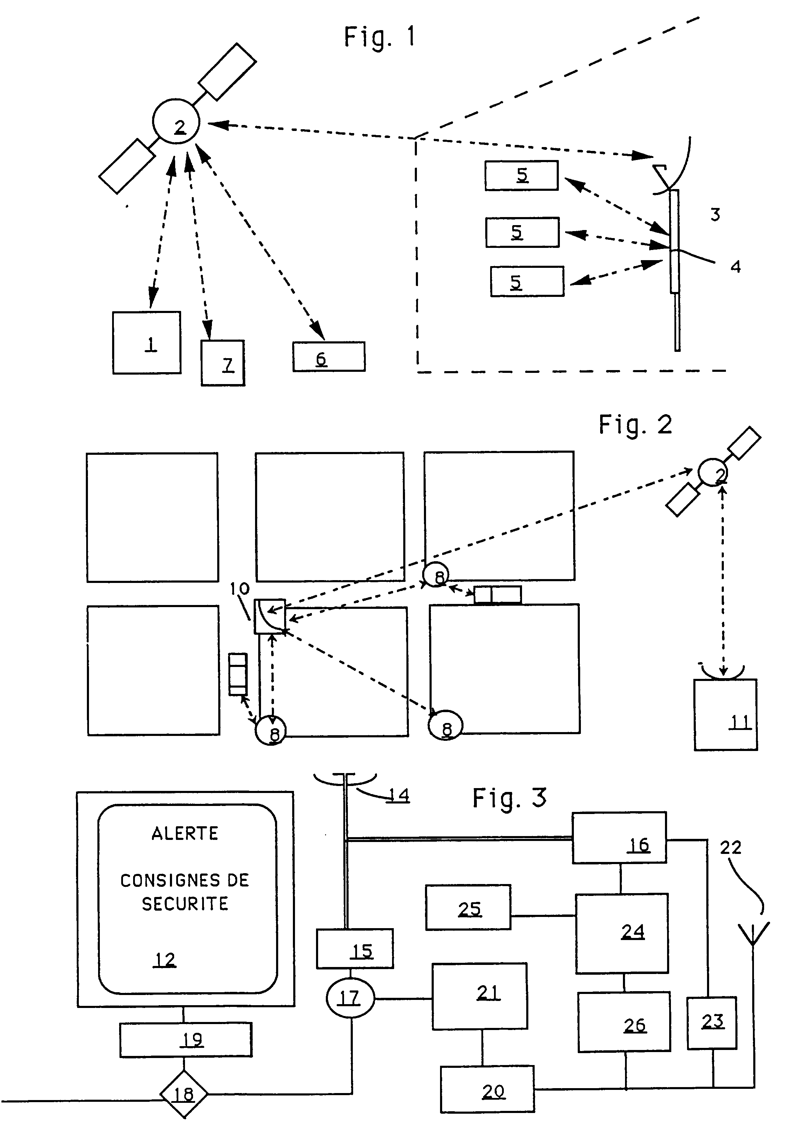

La figure 1 représente un exemple de mise en oeuvre de l'invention. Les signaux à transmettre sont dans l'exemple décrit des signaux de radiodiffusion provenant de l'émetteur (1) d'une station de radio. Ces signaux sont du type numérique, et sont transmis de façon connue à un satellite de télécommunication 2. Ce satellite réémet des signaux UHF dans une bande de fréquence comprise entre 1 Mhz et 1500 Mhz. Au sol, une station de réception (3) reçoit les signaux numériques provenant du satellite 2. Cette station de réception au sol (4) est constituée par un panneau de signalisation de type connu. Il est relié au réseau de distribution d'énergie électrique pour assurer l'alimentation des fonctions d'affichages. Cette alimentation sert en outre à assurer le fonctionnement des moyens d'émission et de réception. La partie supérieure du panneau présente une surface orientée (4) dans laquelle est logée une antenne de réception de signaux centimétriques. L'inclinaison et la taille de l'antenne sont déterminées de façon connue par l'Homme de métier.

Le panneau (3) comporte en outre un émetteur travaillant à une fréquence favorable à la transmission dans une zone urbaine ou de façon plus générale dans une zone dans laquelle les conditions de transmission des ondes centimétriques sont mauvaises. A titre d'exemple, la fréquence d'émission est de l'ordre de 100 Mhz. Les signaux numériques provenant de la liaison avec le satellite sont réémis dans la longueur d'onde susmentionnée afin d'être captés dans des conditions satisfaisantes par des récepteurs mobiles, ou de petite dimension et d'un coût de revient faible. A titre d'exemple, ces signaux sont reçus par des récepteurs disposés dans des voitures automobiles (5). Ce mode de réception est par ailleurs complémentaire avec une réception directe par certains véhicules (6) ou par des stations fixes de conception plus élaborée.

Un deuxième centre d'émission (7) peut être prévu pour la transmission de signaux d'alerte. Ce deuxième centre de transmission (7) est destiné à envoyer des messages d'alerte prioritaires. Ces messages sont retransmis comme les autres signaux par satellite. La station au sol (3) comporte des moyens de reconnaissance des signaux d'alerte, par exemple grâce à un code particulier constituant le préambule du message numérique codé. La reconnaissance d'une telle chaîne de caractère déclenche l'interruption des émissions non prioritaires et l'émission dans la bande de fréquence choisie pour la communication au sol d'un message d'alerte. Ce message d'alerte peut également être émis à une fréquence correspondant à la fréquence intermédiaire des récepteurs employés par les utilisateurs. Par ailleurs, la reconnaissance du message d'alerte peut provoquer l'apparition sur le panneau de signalisation (3) l'apparition d'un message se substituant au moins partiellement au message publicitaire ou informatif habituel.

Ce message permet d'avertir une population importante de l'imminence d'un danger naturel tel qu'un tremblement de terre ou d'une tempête et de diffuser des consignes de sécurité.

La figure 2 représente une vue d'un autre mode de réalisation. Il est plus particulièrement destiné au guidage de véhicule et à la gestion d'une flotte de véhicules, par exemple des camions de livraison ou des taxis, à partir d'une station centrale d'émission-réception et de traitement. L'invention consiste à mettre en place un maillage de balises (8) de faible portée intégré dans un mobilier ayant une autre fonction principale. Il peut s'agir par exemple de feux de signalisation constituant un maillage dense d'une zone urbaine, ou de panneau indicateur de direction constituant un maillage efficace du réseau routier. Certaines au moins de ces balises comportent des moyens d'émission-réception fonctionnant dans la bande centimétrique et communiquant avec le satellite (2). Ces balises (10) comportent une antenne de réception des faisceaux hertziens centimétriques et/ou d'émission dans ladite bande de fréquence. La liaison entre ces balises principales (10) et les balises secondaires (8) s'effectue soit par liaison hertzienne dans des bandes de fréquence adaptées à la transmission dans la zone considérée, ou par une liaison câblée. Les balises secondaires (8) comportent des moyens de communication avec la ou les balises principales (10) ainsi que des moyens d'échange d'informations avec des récepteurs et/émetteurs embarqués.

Les échanges d'informations entre la balise secondaire (8) et un véhicule passant à proximité permettent de localiser ledit véhicule et de transmettre ses coordonnées au centre de traitement (11). Cette localisation peut être effectuée par des moyens goniométriques, ou encore par l'affectation à chaque balise d'une adresse transmise sous forme de séquence de codage lors de l'émission d'un message par ladite balise (8). La balise (8) comporte dans ce cas en outre un émetteur générant un signal d'activation d'un système d'identification embarqué dans les véhicules appartenant à la flotte considérée. Lors de la détection de ce signal d'activation, l'émetteur embarqué répond par un signal codé comportant une séquence numérique d'identification du véhicule. La balise (8) reçoit cette réponse et émet à son tour un signal comportant une première séquence codée permettant l'identification de la balise la plus proche du véhicule considéré, et une deuxième séquence ccdée identifiant ledit véhicule. Ce signal codé est transmis au centre de traitement (11) par l'intermédiaire du satellite (2).

La figure 3 représente le schéma de principe d'un panneau de signalisation pour la mise en oeuvre de l'invention.

A titre d'exemple, on décrira un exemple de réalisation correspondant à un panneau d'information urbaine présentant une fenêtre d'affichage (12) d'un texte. Ce type de panneau est mis en place dans de nombreuses villes pour la diffusion d'informations sur la vie municipale ou culturelle, ou encore relatives à la circulation. Ce panneau est relié au réseau de distribution électrique ainsi qu'à un réseau (13) véhiculant les signaux numériques provenant d'un centre de commande commandant les affichages à faire apparaître sur lesdits panneaux.

Le panneau est muni d'une antenne (14) de réception et d'émission de signaux hertziens de communication avec un satellite. Cette antenne (14) est reliée d'une part à un récepteur (15) et d'autre part à un émetteur (16). Les signaux numériques provenant du récepteur (15) sont transmis à un dispositif de reconnaissance de séquences de caractères identifiant les messages d'alerte prioritaires. Lorsque ledit circuit reconnait la séquence annonçant un message prioritaire, il adresse un signal d'interruption de l'affichage des messages diffusés sur le réseau (13) à un circuit (18) et adresse un signal numérique au générateur de caractères commandant l'affichage d'un message d'urgence sur le panneau (12). Par ailleurs, les signaux numériques provenant du récepteur (15) des signaux satellites sont transmis à un émetteur (20) après traitement dans un circuit (21). L'émetteur (20) est relié à une antenne de radiocommunication (22) de type connu.

L'antenne reçoit par ailleurs des signaux provenant des émetteurs embarqués sur les véhicules de la flotte. Ces signaux sont de deux types : d'une part des signaux de repérage de la position du véhicule émit par un émetteur embarqué activé par un signal émis par le panneau considéré. Ces signaux comportent une séquence codée permettant l'identification du véhicule. Ces signaux sont captés par un premier récepteur (23) et transmis à un multiplexeur (24) recevant d'un générateur (25) par ailleurs une séquence codée permettant d'identifier le panneau, et en conséquence la position approximative du véhicule. Les signaux reçus correspondent également à des messages vocaux ou à des signaux codés, qui sont transmis au multiplexeur (24) par l'intermédiaire d'un récepteur spécifique (26). La gestion de ces signaux pour un envoi sous forme de paquets ainsi que la coordination avec les autres panneaux réemetteurs s'effectue grâce au multiplexeur (24) auquel sont associés des circuits d'horloge et de synchronisation de type connu.

La présente invention n'est aucunement limitée aux modes de réalisation exposés dans ce qui précède, mais s'étend au contraire à de nombreuses variantes de mode de mise en oeuvre.

## Revendications

1. Procédé de transmission d'informations par voie hertzienne notamment entre un satellite (2) et une pluralité de stations terrestres (5) dont certaines au moins sont disposées dans des zones de mauvaises conditions de transmissions des ondes centimétriques, ledit procédé mettant en oeuvre des relais comportant des moyens de réception et des moyens émetteurs caractérisé en ce que l'on intègre dans une pluralité d'agencements (3) urbains ou ruraux ayant une fonction principale de signalisation, de décoration et/ou de présentation d'informations une première série de moyens d'émission et/ou de réception opérant dans les longueurs d'onde utilisées pour la communication avec ledit satellite et au moins une deuxième série de moyens d'émission et/ou de réception opérant dans une bande de longueur d'onde compatible avec les conditions de transmissions entre lesdits deuxièmes moyens et lesdites stations terrestres (5), la portée desdits deuxièmes moyens étant inférieure ou égale aux dimensions de la zone de mauvaises conditions de réception des ondes centimétriques.

2. Procédé de transmission d'informations par voie hertzienne entre un satellite (2) et une pluralité de stations terrestres (5) selon la revendication 1 caractérisé en ce que lesdits agencements (3) sont constitués par des panneaux publicitaires et en ce qu'ils sont reliés à une source d'énergie.

3. Procédé de transmission d'informations par voie hertzienne entre un satellite et une pluralité de stations terrestres (5) selon la revendication 1 caractérisé en ce que lesdits agencements (3) sont constitués par des panneaux de signalisation routière.

4. Procédé de transmission d'informations par voie hertzienne entre un satellite et une pluralité de stations terrestres selon la revendication 1 caractérisé en ce que lesdits agencements (3) sont constitués par des panneaux d'information comportant des moyens d'affichages de messages visuels.

5. Procédé de transmission d'informations par voie hertzienne entre un satellite (2) et une pluralité de stations terrestres (5) selon l'une quelconque des revendications précédentes caractérisé en ce que l'on intègre en outre dans lesdits agencements (3) des moyens de localisation de stations terrestres mobiles susceptibles de se déplacer dans la zone de mauvaises conditions de réception., lesdits moyens de localisations générant un signal représentatif de la position de ladite station terrestre mobile, ledit signal étant transmis au satellite (2).

6. Procédé de transmission d'informations par voie hertzienne entre un satellite et une pluralité de stations terrestres selon l'une quelconque des revendications précédentes caractérisé en ce que l'on intègre en outre dans lesdits agencements des moyens de détection d'un signal de priorité apte à déclencher l'émission d'un message radiodiffusé, télédiffusé et/ou à déclencher l'affichage d'un message visuel sur ledit agencement.

7. Panneau d'affichage publicitaire pour la mise en oeuvre du procédé selon l'une quelconque des revendications 1 à 6 caractérisé en ce qu'il comporte une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres (5) disposés dans une zone de mauvaises conditions de transmission d'ondes centimétriques.

8. Panneau d'affichage d'informations visuels provenant d'un serveur central de gestion des messages d'informations pour la mise en oeuvre du procédé selon l'une quelconque des revendications 1 à 6 caractérisé en ce qu'il comporte une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres disposées dans une zone de mauvaises conditions de transmission d'ondes centimétriques.

9. Panneau d'affichage d'informations visuelles provenant d'un serveur central de gestion des messages d'informations selon la revendication 8 caractérisé en ce qu'il comporte en outre un détecteur d'un signal de priorité générant un signal d'interruption de l'affichage du message d'information provenant dudit serveur central et provoquant l'affichage d'un message d'information prioritaire et/ou l'émission d'un message prioritaire par voie hertzienne dans la bande de fréquence des récepteurs de stations terrestres.

10. Panneau de signalisation routière pour la mise en oeuvre du procédé selon l'une quelconque des revendications 1 à 6 caractérisé en ce qu'il comporte une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres disposées dans une zone de mauvaises conditions de transmission d'ondes centimétriques.

11. Agencement pour la mise en oeuvre du procédé selon la revendication 5, caractérisé en ce que ledit agencement est un agencement urbain ou rural ayant une fonction principale de signalisation, de décoration et/ou de présentation d'informations comportant une première antenne coopérant avec des moyens d'émission et/ou de réception de signaux provenant ou destinés à un satellite de communication, et une deuxième antenne coopérant avec des moyens d'émission et/ou de réception de signaux provenant ou destinés à des stations terrestres (5) disposés dans une zone de mauvaises conditions de transmission d'ondes centimétriques, et en ce que ledit agencement comporte un émetteur apte à activer l'émission par un système embarqué sur une station terrestre mobile déterminée d'un signal codé, ledit signal codé étant détecté par un récepteur goniométirique équipant ledit agencement, ledit agencement comportant en outre des moyens de transmission à un satellite de communication d'un signal relatif à la position de ladite station terrestre mobile déterminée.

## Patentansprüche

1. Verfahren zur Funkübertragung von Nachrichten insbesondere zwischen einem Satelliten (2) und einer Mehrzahl von Bodenstationen (5), von denen zumindest einige in Zonen mit schlechten Übertragungsbedingungen für Zentimeterwellen angeordnet sind, wobei das Verfahren Relais einsetzt, die Empfangsmittel und Sendemittel aufweisen, dadurch gekennzeichnet, daß man in eine Mehrzahl von städtischen oder ländlichen Anordnungen (3), deren Hauptfunktion die Signalisierung, Ausgestaltung und/oder Darstellung von Informationen ist, eine erste Reihe von Sende- und/oder Empfangsmitteln einbaut, die mit Wellenlängen arbeiten, welche für die Kommunikation mit dem Satelliten verwendet werden, und mindestens eine zweite Reihe von Sende- und/oder Empfangsmitteln einbaut, die in einem Wellenlängenbereich arbeiten, welcher mit den Übertragungsbedingungen zwischen den zweiten Mitteln und den Bodenstationen (5) kompatibel ist, wobei die Reichweite dieser zweiten Mittel kleiner ist als die Ausdehnung der Zone mit schlechten Empfangsbedingungen für Zentimeterwellen oder dieser entspricht.

2. Verfahren zur Funkübertragung von Nachrichten zwischen einem Satelliten (2) und einer Mehrzahl von Bodenstationen (5) nach Anspruch 1, dadurch gekennzeichnet, daß die Anordnungen (3) von Reklametafeln gebildet werden und daß sie mit einer Energiequelle verbunden sind.

3. Verfahren zur Funkübertragung von Nachrichten zwischen einem Satelliten und einer Mehrzahl von Bodenstationen (5) nach Anspruch 1, dadurch gekennzeichnet, daß die Anordnungen (3) von Straßenbeschilderungstafeln gebildet werden.

4. Verfahren zur Funkübertragung von Nachrichten zwischen einem Satelliten und einer Mehrzahl von Bodenstationen nach Anspruch 1, dadurch gekennzeichnet, daß die Anordnungen (3) von Informationstafeln gebildet werden, die Mittel zur Anzeige visueller Mitteilungen aufweisen.

5. Verfahren zur Funkübertragung von Nachrichten zwischen einem Satelliten (2) und einer Mehrzahl von Bodenstationen (5) nach irgendeinem der vorhergehenden Ansprüche, dadurch gekennzeichnet, daß man in die Anordnungen (3) außerdem Mittel zur Ortung von mobilen Bodenstationen einbaut, die sich in der Zone mit schlechten Empfangsbedingungen bewegen können, wobei diese Ortungsmittel ein Signal erzeugen, das für die Position der beweglichen Bodenstation charakteristisch ist, wobei dieses Signal zum Satelliten (2) übertragen wird.

6. Verfahren zur Funkübertragung von Nachrichten zwischen einem Satelliten und einer Mehrzahl von Bodenstationen nach irgendeinem der vorhergehenden Ansprüche, dadurch gekennzeichnet, daß man in die Anordnungen außerdem Mittel zur Erfassung eines Prioritätssignals einbaut, das die Aussendung einer Rundfunk- bzw. Fernsehnachricht auslösen kann und/oder die Anzeige einer visuellen Mitteilung auf der Anordnung auslösen kann.

7. Tafel zur Anzeige von Reklame zur Ausführung des Verfahrens nach irgendeinem der Ansprüche 1 bis 6, dadurch gekennzeichnet, daß sie eine erste Antenne, die mit Sende- und/oder Empfangsmitteln für Signale zusammenwirkt, welche von einem Nachrichtensatelliten stammen oder für einen solchen bestimmt sind, und eine zweite Antenne aufweist, die mit Sende- und/oder Empfangsmitteln für Signale zusammenwirkt, die von Bodenstationen (5) stammen oder für solche bestimmt sind, wobei die Bodenstationen in einer Zone mit schlechten Übertragungsbedingungen für Zentimeterwellen angeordnet sind.

8. Tafel zur Anzeige von visuellen Informationen, die von einem zentralen Server zur Verwaltung der Informationsmeldungen stammen, zur Ausführung des Verfahrens nach irgendeinem der Ansprüche 1 bis 6, dadurch gekennzeichnet, daß sie eine erste Antenne, die mit Sende- und/oder Empfangsmitteln für Signale zusammenwirkt, welche von einem Nachrichtensatelliten stammen oder für einen solchen bestimmt sind, und eine zweite Antenne aufweist, die mit Sende- und/oder Empfangsmitteln für Signale zusammenwirkt, die von Bodenstationen stammen oder für solche bestimmt sind, wobei die Bodenstationen in einer Zone mit schlechten Übertragungsbedingungen für Zentimeterwellen angeordnet sind.

9. Tafel zur Anzeige von visuellen Informationen, die von einem zentralen Server zur Verwaltung der Informationsmeldungen stammen, nach Anspruch 8, dadurch gekennzeichnet, daß sie außerdem einen Detektor für ein Prioritätssignal aufweist, der ein Signal zur Unterbrechung der Anzeige der von dem zentralen Server stammenden Informationsmeldung erzeugt und die Anzeige einer vorrangigen Informationsmeldung und/oder die Aussendung einer vorrangigen Nachricht über Funk in dem Frequenzbereich der Empfänger von Bodenstationen bewirkt.

10. Straßenbeschilderungstafel zur Ausführung des Verfahrens nach irgendeinem der Ansprüche 1 bis 6, dadurch gekennzeichnet, daß sie eine erste Antenne, die mit Sende- und/oder Empfangsmitteln für Signale zusammenwirkt, welche von einem Nachrichtensatelliten stammen oder für einen solchen bestimmt sind, und eine zweite Antenne aufweist, die mit Sende- und/oder Empfangsmitteln für Signale zusammenwirkt, die von Bodenstationen stammen oder für solche bestimmt sind, wobei die Bodenstationen in einer Zone mit schlechten Übertragungsbedingungen für Zentimeterwellen angeordnet sind.

11. Anordnung zur Ausführung des Verfahrens nach Anspruch 5, dadurch gekennzeichnet, daß die Anordnung eine städtische oder ländliche Anordnung ist, deren Hauptfunktion die Signalisierung, Ausgestaltung und/oder Darstellung von Informationen ist und die eine erste Antenne, die mit Sende- und/oder Empfangsmitteln für Signale zusammenwirkt, welche von einem Nachrichtensatelliten stammen oder für einen solchen bestimmt sind, und eine zweite Antenne aufweist, die mit Sende- und/oder Empfangsmitteln für Signale zusammenwirkt, die von Bodenstationen (5) stammen oder für solche bestimmt sind, wobei die Bodenstationen in einer Zone mit schlechten Übertragungsbedingungen für Zentimeterwellen angeordnet sind, und dadurch, daß die Anordnung einen Sender aufweist, der die Aussendung eines kodierten Signals durch ein auf einer bestimmten mobilen Bodenstation befindliches System aktivieren kann, wobei das kodierte Signal von einem Peilempfänger erfaßt wird, mit dem die Anordnung ausgestattet ist, wobei die Anordnung außerdem Mittel zur Übertragung einen Signals, das sich auf die Position der genannten bestimmten mobilen Bodenstation bezieht, an einen Nachrichtensatelliten aufweist.

## Claims

1. A process for transmitting pieces of information through wireless channel especially between a satellite (2) and a plurality of earth stations (5), at least some of which are arranged in areas subject to bad conditions for transmitting centrimetric waves, said process implementing relays including receiving means and emitting means, characterized in that, in a plurality of urban or rural arrangements (3) having the main function of signalling, decorating and/or displaying pieces of information, a first series of emitting means and/or receiving means operating within the wavelength used for comunicating with said satellite and at least a second series of emitting means and/or receiving means operating in a wavelenght band consistent with transmitting conditions between said second means and said earth stations (5) are integrated, with the range of said second means being lower or equal to the dimensions of the area subject to bad conditions for receiving centrimetic waves.

2. The process for transmitting pieces of information through wireless channel between a satellite (2) and a plurality of earth stations (5) as recited in claim 1, characterised in that said arrangements include advertising panels and in that they are connected to a power source.

3. The process for transmitting pieces of in information through wireless channel between a satellite (2) and a plurality of earth stations (5) as recited in claim 1, characterised in that said arrangements (3) include traffic signs.

4. The process for transmitting pieces of information through wireless channel between a satellite (2) and a plurality of each stations as recited in claim 1, characterised in that said arrangements (3) include information panels with means for displaying visual messages.

5. The process for transmitting pieces of information through wireless channel between a satellite (2) and a plurality of each stations as recited in any preceding claim, characterised in that in said arrangements (3), locating means are further integrated for locating movable earth stations capable of moving within the area subject to bad receiving conditions, with said locating means generating a signal which represents said movable earth station position, said signal being transmitted to said satellite (2).

6. The process for transmitting pieces of information through wireless channel between a satellite (2) and a plurality of each stations as recited in any preceding claim, characterised in that in said arrangements, means are further integrated for detecting a priority signal liable to release the emission of broad cast, televised messages and/or to release the display of a visual message on said arrangement.

7. An advertising panel for the implementation of the process as recited in any claim 1-6, characterised in that it includes a first antenna which cooperates with means for emitting and/or receiving signals originated from or intended for a communication satellite, and a second antenna which cooperates with means for emitting and/or receiving signals originated from or intended for earth stations (5) located in an area subject to bad conditions for transmitting centrimetric waves.

8. A panel for displaying visual information from a central server for the management of information messages with a view to implementing the process as recited in any claim 1-6, characterized in that it includes a first antenna which cooperates with means for emitting and/or receiving signals originated from or intended for a communication satellite, and a second antenna which cooperates with means for emitting and/or receiving signals originated form or intended for earth stations located in an area subject to bad conditions for transmitting centrimetric waves.

9. A panel for displaying visual information form a central server for the management of information messages as recited in claim 8, characterized in that it further includes a priority signal detector which generates a signal for interrupting the information message display from said central server, and brings about displaying priority information message and/or emitting a priority message through wireless channel within the frequency band of the earth station receivers.

10. A traffic sign for implementing the process as recited in any claim 1-6, characterised in that it includes a first antenna which cooperates with means for emitting and/or receiving signals originated from or intended for a communication satellite, and a second antenna which cooperates with means for emitting and/or receiving signals originated form or intended for earth stations located in an area subject to bad conditions for transmitting centimetric waves.

11. An arrangement for implementing the process as recited in claim 5, characterised in that said arrangement is an urban or rural arrangement having the main function of signalling, decorating and/or displaying pieces of information including a first antenna which cooperates with means for emitting and/or receiving signals originated form or intended for a communication satellite, and a second antenna which cooperates with means for emitting and/or receiving signals originated form or intended for earth stations (5) located in an area subject to bad conditions for transmitting centimetric waves, and in that said arrangement comprises a transmitter liable to activate a system on board of a predetermined movable earth station for emitting a coded signal, with said coded signal being detected by a goniometric receiver on said arrangement, said arrangement further including means for transmitting a signal to a communication satellite which refers to said predetermined movable earth station position.
